Europäisches Patentamt

European Patent Office

Office européen des brevets

(11) Publication number: **0 215 711**
A2

# EUROPEAN PATENT APPLICATION

(21) Application number: **86401977.3**

(22) Date of filing: **10.09.86**

(51) Int. Cl.⁴: **H 04 B 9/00**

(30) Priority: **10.09.85 IT 2209785**

(43) Date of publication of application: **25.03.87**
**Bulletin 87/13**

(84) Designated Contracting States: **FR GB**

(71) Applicant: **International Standard Electric Corporation,
320 Park Avenue, New York New York 10022 (US)**

(72) Inventor: **Fioretti, Alberto, Largo Pannonia 23, Roma (IT)**

(74) Representative: **Kohn, Philippe et al, ITT Data Systems
France S.A. Tour Maine-Montparnasse 33, avenue du
Maine, F-75755 Paris Cedex (FR)**

(54) **Voice and data distribution system with fiber optic multinode star network.**

(57) This invention fits the technical sector of the voice and data digital telecommunication networks by means of optical fibers and relates to a fiber optic distribution system for voice and data with star network, i.e. a network in which all the terminals are connected to a central node, in which this latter is replaced by a multinode distributed structure for enhancing the network reliability.

1

This invention relates to a voice and data distribution system with a fiber optic multinode star network, preferably employable in the Local Area Networks (LAN), for voice and data transmission.

As known, in the telecommunication field it has been currently given a prominent development to the optical transmission with lightwaves propagating through a transparent solid medium.

Optical telecommunications employ optical waveguides called optical fibers because of their structure. These optical fibers, linking several end users, may form a terminal network more or less complex.

When all terminals of a network are linked to a single central node, then this network is called a star network.

Currently, in a star network all terminals are connected to a same central node which can be active or passive. In the first case, an active star node may be represented by a signal repeater or by a switching network.

In the second case, a passive star node may be represented by an optical signal coupler.

An optical signal coupler can be of the reflection or of the transmission type.

In a generic star network, using an optical signal coupler, the latter represents a central star node, because it joins all the optical fibers that link the transmitters to the receivers of a generic plurality of terminals.

In a star network, however, if the single star centre node fails, this paralizes the whole system served by this network.

With the current state of the art, in order to improve the network reliability, making it less sensitive to the failures of a star centre, sole node of the network, the latter is duplicated, by also doubling the respective links between terminals and the duplicated central node.

This type of solution, however, bears the drawback to have to halve the signal powers from and to the terminals. Consequently, an additional loss of about three decibels on the generic path attenuation is generated.

This drawback is particularly heavy in the passive star networks, in which the star centre node already alone contributes to cause an insertion loss of about 10 (log n) decibels, where n indicates the number of terminals.

The main object of this invention is to overcome the aforesaid drawbacks, of the currently known systems, by implementing a distribution system for voice and data with a fiber optic multinode star network, in which a plurality of node couplers form a multiple node, which is distributed over a certain area and in every respect represents a virtual star centre.

It is convenient now to define what it is understood as multinode star centre.

By multinode star centre it is meant a system capable to distribute an optical signal of either of n inlets over either of n outlets.

This object and others yet, which will be better understood in the following description, are reached according to the present invention, by a voice and data distribution system with fiber optic multinode star network characterized in that it comprises a virtual star centre realized through a plurality of transmission nodal optical couplers, which as a whole constitute a multiple node distributed over a certain area, said transmission nodal optical couplers being connected according to the following criteria :

a) the n outputs of a first node, transmission side, are subdivided in m different groups, each coupled to n/m optical fibers linked to the inputs 1,2,...,n/m of a node of the receiving side, according to a corresponding sequential order ;

3

b) the n outputs of a second node, transmission side, are subdivided in m different groups, each coupled to n/m optical fibers connected to the inputs n/m+1, n/m+2,...,2n/m of a node of the receiving side, according to a corresponding sequential order ;

c) the n outputs of each of the remaining nodes of the transmission side are distributed onto the remaining inputs of the nodes of the receiving side in the same way as before described.

Further features and advantages of this invention will be more evident from a detailed description of a preferred, but not exclusive, embodiment of a voice and data distribution system with a fiber optic multinode star network, made in the following with reference to the accompanying drawings given as a pure example and therefore not restrictive, in which :

- figure 1 shows a generic linking scheme of a virtual star centre node in accordance to the present invention ;

- figure 2 shows a circuit embodiment of a virtual star centre node by means of eight transmission optical couplers connected according to this invention.

Referring to the mentioned figures, and in particular to the first one, 1 indicates one of several optical couplers individualizing a plurality of nodes on transmission side, linked to as many optical couplers 2 of the receiving side through a fiber optic link 3.

The outputs of the mentioned nodes have been indicated with 4, while the inputs in the corresponding nodes receiving side have been indicated with 5.

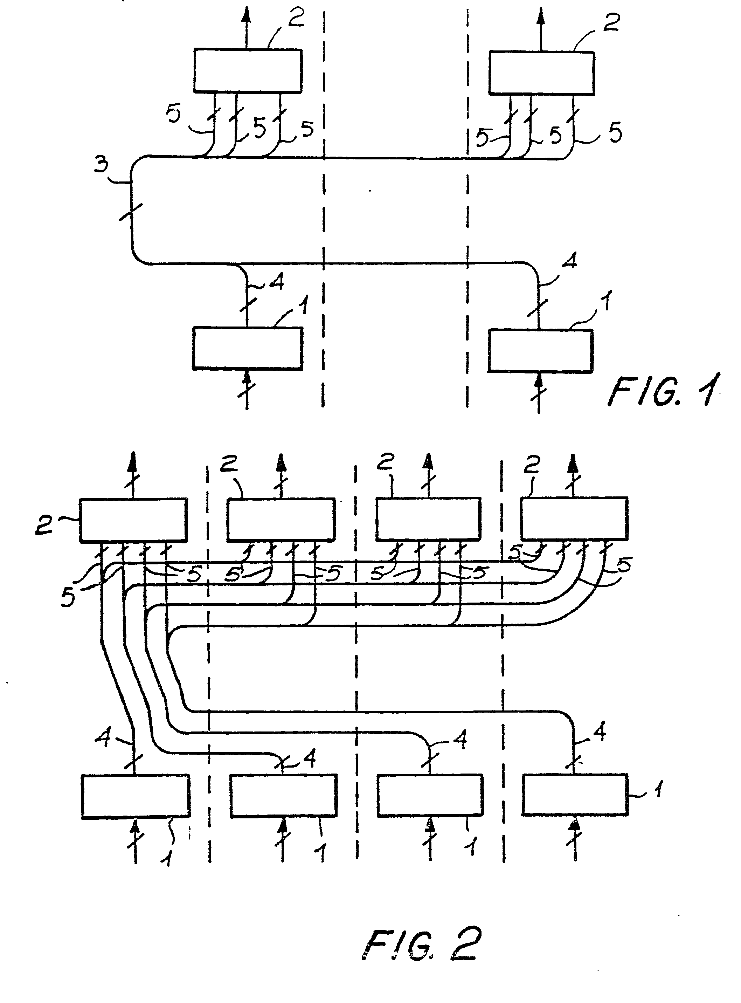

In the embodiment of Figure 2, the number of the optical couplers 1, transmission side, is four, and the one (2) in reception side is likewise four, while there are eight outputs for each coupler. The eight optical fibers 4 leaving each of the couplers in the transmission side are

0215711

4

linked in pairs 5, in a corresponding order, to the four couplers of the receiving side.

After this mainly structural description, the system linking criteria according to the present invention are detailed hereinafter.

First of all, if m is the number of the optical couplers 1 and 2 respectively, of the transmission and receiving sides, embodying as many nodes, and if n is the number of outputs of the nodes, on both sides, it is necessary that both the product n.m and the ratio n/m are always integers so that it is possible to carry out the necessary connections.

The connection criteria are the following, bearing in mind that the node optical couplers on each reference side are indicated with the same number, and constitute a nodal optical coupler :

- the n outputs 4 of the first coupler 1, transmission side, are divided in m different groups, each coupled to n/m optical fibers 5 via suitable coupling means;

- the m groups are coupled in a corresponding order to m optical couplers 2 of the receiving side and, in more details, the optical fibers 4 from a first coupler 1 are connected to the 1,2,...,n/m ranking inputs 5 of each optical coupler 2, of the reception side ;

- the n outputs 4 of a second coupler 1, transmission side are divided in m different groups each linked to n/m optical fibers 5 via suitable coupling means, the optical fibers of each group being coupled in a corresponding order to one of the m optical couplers 2 of the receiving side and, in more details, the relative optical fibers 4 being linked to the n/m+1, n/m+2,...,2n/m ranking inputs 5 of each node (optical coupler) 2 of the receiving side ;

- the n outputs 4 of each of the other couplers 1, transmission side, are distributed in the same way to the

5

remaining inputs 5 of the couplers 2, receiving side.

What said is highlighted in the example illustrated in figure 2, in which is examplified a star centre node with transmission optical couplers where : n = 8 and m = 4.

In this way there are 8 nodal optical couplers, four on the transmission side 1 and four on the receiving side 2 as well as 32 fiber optic connections (n.m =8.4=32).

The invention reaches in this way the proposed objects.

In fact, by means of this multinodal network the system becomes much more reliable, because the failure of one coupler does not put out of use the whole network.

At the same time the structure results much more modular and therefore also easier to check for the operation.

Obviously the present invention is not limited to the sole embodiment described above, but many modifications and variances having the same aim are possible, regarding the distribution modalities and system structure, all falling within the scope of the invention.

6

## C L A I M S

1.  Voice and data distribution system with fiber optic multinode star network characterized in that it includes a virtual star centre node realized with a plurality of transmission nodal optical couplers which as a whole constitute a multiple node distributed over a certain area, said transmission nodal optical couplers being connected according to the following criteria :

a) the n outputs of a first node (1), transmission side, are subdivided in m different groups each coupled to n/m optical fibers (4) linked to the inputs 1,2,...,n/m of a node (2) of the receiving side, according to a corresponding sequential order ;

b) the n outputs of a second node (1), transmission side, are subdivided in m different groups each coupled to n/m optical fibers (4) linked to the inputs n/m+1, n/m+2,..., 2n/m of a node of the receiving side, according to a corresponding sequential order ;

c) the n outputs of each of the remaining nodes (1) of the transmission side are distributed onto the remaining inputs of the nodes of the receiving side in the same way as before described.

2.  Voice and data distribution system with fiber optic multinode star network according to the claim 1, characterized in that both the ratio n/m and the product n.m are integers.

0215711

FIG. 1

FIG. 2